(19) Europäisches Patentamt
European Patent Office
Office européen des brevets

(11) **EP 4 270 378 A1**

(12) **EUROPEAN PATENT APPLICATION**

(43) Date of publication:
**01.11.2023 Bulletin 2023/44**

(21) Application number: **22275057.2**

(22) Date of filing: **27.04.2022**

(51) International Patent Classification (IPC):
*G10K 11/16* (2006.01)     *F01D 25/04* (2006.01)
*F02C 7/045* (2006.01)     *F02K 1/82* (2006.01)
*F02K 9/97* (2006.01)     *F42D 5/05* (2006.01)
*F42D 5/055* (2006.01)     *G10K 11/178* (2006.01)
*B64C 11/00* (2006.01)     *B64C 23/00* (2006.01)
*B64C 27/00* (2006.01)

(52) Cooperative Patent Classification (CPC):
**G10K 11/16; B64C 1/40; F01D 25/04; F42D 5/05;
F42D 5/055;** G10K 11/178

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BAE SYSTEMS plc
London SW1Y 5AD (GB)**

(72) Inventor: **The designation of the inventor has not
yet been filed**

(74) Representative: **BAE SYSTEMS plc
Group IP Department
Warwick House
P.O. Box 87
Farnborough Aerospace Centre
Farnborough Hampshire GU14 6YU (GB)**

(54) **IMPROVED ACOUSTIC BLACK HOLE, STRUCTURAL DAMPER, STRUCTURALLY DAMPED STRUCTURE, AND METHOD**

(57)     There is provided an acoustic black hole comprising: a first region of taper in a first tapering direction along a line of maximal tapering of the first region, the first tapering direction parallel to an axis of the acoustic black hole; and a second region of taper in a second tapering direction along a line of maximal tapering of the second region, the second tapering direction different to the first tapering direction.

Fig. 2

**Description**

FIELD

The present invention relates to an acoustic black hole, a structural damper, a structurally damped structure, and to a method of structural damping.

BACKGROUND

In product design, it is often necessary to design a product that is both lightweight and a low noise structure. However, this results in a conflict between reducing the weight and increasing the sound radiation from the structure. It is known to use a structure referred to as an acoustic black hole (ABH) to provide structural damping.

An acoustic black hole was originally described by Mironov in 1988 (M.A. Mironov. Propagation of a flexural wave in a plate whose thickness decreases smoothly to zero in a finite interval. Soviet Physics: Acoustics, 34(3):318-319, 1988). The acoustic black hole effect is typically achieved by introducing a power law taper into a beam or plate that changes the thickness over a set distance. This change in thickness profile causes the flexural waves propagating along the direction of the ABH to decrease in wave speed. In the theoretical limit, there is no reflection of the waves from the ABH. The ABH effect can also be achieved using other gradient functions, including a power-cosine curve, for example.

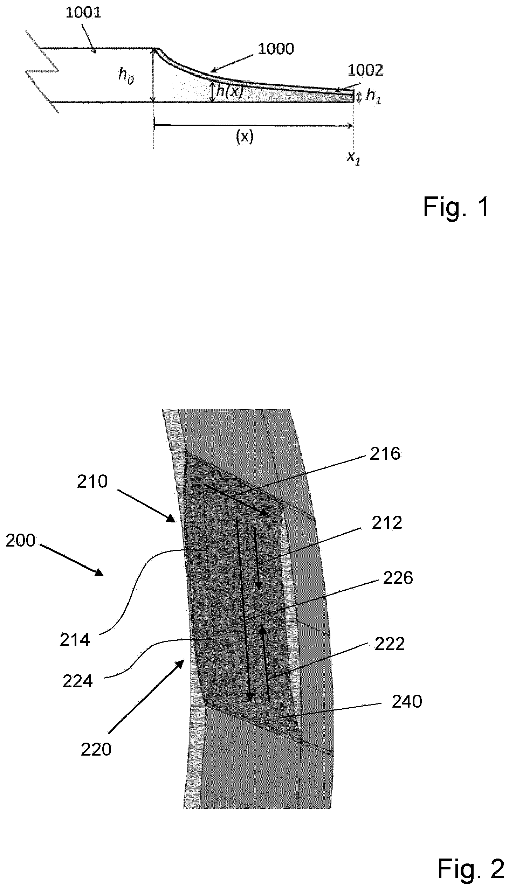

Figure 1 shows an example of an ABH 1000 on a beam 1001. The ABH 1000 is provided with a layer of damping material 1002. The flexural wave speed $c_f(x)$, decreases as the taper height decreases as:

$$c_f(x) = \left(\frac{Eh^2(x)}{12\rho_s}\right)^{\frac{1}{4}} \omega^{\frac{1}{2}}$$

$$(1)$$

where E is the Young's modulus of the ABH material, h(x) is the height of the taper, $\rho_s$ is the density of the ABH material and w is the angular frequency.

From Equation 1 it can be seen that if the tip of the ABH reduces to zero thickness, i.e. h(x)=0, then the flexural wave speed at the tip will be $c_f(x)$=0. In this ideal, theoretical case, the incident wave will not be reflected from the end of the tapered beam and will therefore, be effectively attenuated.

In this respect, acoustic black holes are known in the art. For example, 'Higher-order WKB analysis of reflection from tapered elastic wedges' Journal of Sound and Vibration 449 (2019) 368-388 (Angelis Karlos, Stephen J. Elliot, Jordan Cheer), the contents of which are incorporated herein, provides examples of different types of 'one-dimensional' acoustic black holes. The thickness variations, of these acoustic black holes, are according to the expressions provided in Table 1 below:

**Table 1**

| Thickness profile type | Thickness variation | Length of ideal wedge | Decay parameter |
|---|---|---|---|
| Power-law | $h = h_0\left(1 - \frac{x}{x_0}\right)^n$ | $x_0 = \frac{x_1}{1-\left(\frac{h_1}{h_0}\right)^{1/n}}$ | - |
| Exponential | $h = h_0 e^{-\beta x}$ | $\infty$ | $\beta = \frac{1}{x_1 \ln\left(\frac{h_0}{h_1}\right)}$ |
| Power-cosine | $h = h_0 \cos^n\left(\frac{\pi x}{2x_0}\right)$ | $x_0 = \frac{\pi x_1}{2\arccos\left(\left(\frac{h_1}{h_0}\right)^{1/n}\right)}$ | - |
| Gaussian | $h = h_0 e^{-\gamma x^2}$ | $\infty$ | $\gamma = \frac{1}{x_1^2 \ln\left(\frac{h_0}{h_1}\right)}$ |
| Compound power-law | $h = \begin{cases} \frac{h_0}{2}\left(2 - \left(\frac{2x}{x_0}\right)^n\right), 0 \leq x \leq \frac{x_0}{2} \\ \frac{h_0}{2}\left(2 - \frac{2x}{x_0}\right)^n, \frac{x_0}{2} \leq x \leq x_0 \end{cases}$ | $x_0 = \frac{2x_1}{2-\left(\frac{h_1}{h_0}\right)^{1/n}}$ | - |

where:

'x' is the distance, in the length direction, from the upstream end of the acoustic black hole (i.e. at the start of the taper);

'x1' is the length of the acoustic black hole;

'h' is the thickness of the acoustic black hole (at position (x));

'h0' is the thickness of the acoustic black hole at the upstream end of the acoustic black hole (i.e. at position (x = 0));

'h1' is the thickness of the acoustic black hole at the downstream end of the acoustic black hole (i.e. at position (x = x1));

'n' is power coefficient of the shape function (which must be greater or equal to 2).

These parameters are illustrated in Figure 1.

Whilst ABHs in beams or planar structures have been developed, they have limited applications. For example, conventional ABHs are not suitable for incorporation in other (e.g., non-planar) structures. Previous developments have been focused on incorporating ABHs in straight beams and flat plates. To broaden the potential applications of ABHs, it is desirable to overcome this limitation.

It is one aim of the present invention, amongst others, to provide a improved acoustic black hole and/or structure and/or address one or more of the problems discussed above, or discussed elsewhere, or to at least provide an alternative acoustic black hole or structure.

SUMMARY

According to an aspect of the present invention, there is provided an acoustic black hole comprising: a first region of taper in a first tapering direction along a line of maximal tapering of the first region, the first tapering direction parallel to an axis of the acoustic black hole; and a second region of taper in a second tapering direction along a line of maximal tapering of the second region, the second tapering direction different to the first tapering direction.

In one example, the second tapering direction is opposite to the first tapering direction.

In one example, the first tapering direction and second tapering direction are oriented toward one another or away from one another.

In one example, the second tapering direction is parallel to the axis, or is at an angle to the axis.

In one example, the axis is a second axis, the acoustic black hole further comprising a first axis in which there is no taper.

In one example, the axis is a first axis, the acoustic black hole further comprising, in a second axis, no taper.

In one example, the axis is a first axis, the acoustic black hole further comprising, in a second axis , at least one of: a first region of taper in a first tapering direction; and a second region of taper in a second tapering direction.

In one example, in the second axis there is at least a region of concave curvature.

In one example, the axis is a first axis, the acoustic black hole further comprising, in a second axis: a first region of taper in a first tapering direction; and a second region of taper in a second tapering direction.

In one example, the acoustic black hole has the form of a circle or square.

According to a second aspect of the present invention there is provided a structurally damped structure comprising: an acoustic black hole according to any one of the preceding claims; and a primary structure.

In one example, the primary structure comprises: in the first axis, zero curvature; in the second axis, at least a region of concave curvature.

In one example, the primary structure comprises: in the first axis, zero curvature; in the second axis, at least a region of concave or convex curvature, wherein the ABH is provided as only a portion of the structurally damped structure in the second axis.

In one example, the primary structure comprises: in the first axis, zero curvature; in the second axis, at least a region of concave or convex curvature.

In one example, the primary structure comprises: in the first axis, at least a region of concave or convex curvature; in a second axis, at least a region of concave or convex curvature.

In one example, in the acoustic black hole according to the first aspect or structurally damped structure according to the second aspect, the second axis is perpendicular to the first axis.

In one example, the acoustic black hole according to the first aspect or structurally damped structure according to the second aspect further comprises a damping material provided on at least a region of the acoustic black hole.

According to a third aspect of the present invention, there is provided a structural damper for providing structural damping to a primary structure comprising: an acoustic black hole according to the first aspect; at least one sensor; an actuator configured to apply an actuating force to the primary structure and/or to the acoustic black hole; and a controller configured to control the actuator in dependence on a signal from the at least one sensor so as to provide structural damping of the primary structure.

In one example, the controller is configured to control the actuating force applied by the actuator, to the primary structure and/or acoustic black hole, so as to control at least one of: (a) the vibration of the primary structure; (b) a flexural wave in the primary structure; (c) the acoustic radiation from the primary structure.

In one example, the controller is configured to control at least one of features (a) to (c) by controlling the vibration of the acoustic black hole and/or a flexural wave in the acoustic black hole.

In one example, the controller is configured to control the reflected flexural wave from the acoustic black hole.

In one example, the controller is configured to control the acoustic radiation from the primary structure.

In one example, the at least one sensor is an acoustic sensor configured to sense the acoustic radiation from the primary structure.

In one example, the acoustic black hole is provided with passive damping.

In one example, the actuator is configured to apply the actuating force to a structurally damped structure and/or structural damper at a different location to the acoustic black hole.

In one example, the at least one sensor comprises first and second sensors and the controller comprises a wave decomposition unit configured to decompose the signals from the first and second sensors into incident and reflected wave components.

In one example, the at least one sensor is configured to sense acoustic radiation from the primary structure and the controller is configured to calculate the radiated sound field from the primary structure.

In one example, the primary structure is a structure of a vehicle.

According to a fourth aspect of the present invention, there is provided a method of providing structural damping to a primary structure, using a structural damper, the structural damper comprising: an acoustic black hole; at least one sensor; and an actuator configured to apply an actuating force to the primary structure and/or acoustic black hole, wherein the method comprises controlling the actuator in dependence on a signal from the at least one sensor so as to provide structural damping of a primary structure.

In one example, the method comprises controlling the actuator to control at least one of: (a) the vibration of the primary structure; (b) a flexural wave in the primary structure; (c) the acoustic radiation from the primary structure.

According to a fifth aspect of the present invention, there is provided a kit of parts of a structural damper, the kit of parts comprising: an acoustic black hole, at least one sensor, an actuator for applying an actuating force to the acoustic black hole and/or to a primary structure; and a controller configured to control the actuator in dependence on a signal from the at least one sensor so as to provide structural damping of a primary structure.

BRIEF DESCRIPTION OF THE FIGURES

Embodiments of the invention will now be described by way of example only with reference to the figures, in which:

Figure 1 shows an acoustic black hole on a beam according to the prior art;
Figure 2 shows an acoustic black hole;
Figure 3 shows a structurally damped structure;
Figure 4 shows an acoustic black hole;
Figure 5 shows an acoustic black hole;
Figure 6 shows a structurally damped structure;
Figures 7(a) and 7(b) show an acoustic black hole;
Figures 8(a) and 8(b) show an acoustic black hole;
Figure 9 shows a structurally damped structure;
Figure 10 shows a structurally damped structure;
Figures 11(a) and 11(b) show an acoustic black hole;
Figure 12 shows a structurally damped structure;
Figure 13 shows a structurally damped structure comprising a primary structure and a structural damper;
Figure 14 shows a structurally damped structure comprising a primary structure and a structural damper;
Figure 15 shows a structurally damped structure comprising a primary structure and a structural damper;
Figure 16 shows a structurally damped structure comprising a primary structure and a structural damper;
Figure 17 shows a structurally damped structure comprising a primary structure and a structural damper;
Figure 18 shows a structurally damped structure comprising a primary structure and a structural damper;
Figure 19 shows a structurally damped structure comprising a primary structure and a structural damper;
Figure 20 shows a structurally damped structure comprising a primary structure and a structural damper.
Figure 21 shows a vehicle comprising an acoustic black hole, structural damper, and/or a structurally damped structure;
Figure 22 shows a structure comprising an acoustic black hole, structural damper, and/or a structurally damped structure; and

Figure 23 shows general methodology principles.

DETAILED DESCRIPTION

In the description which follows, acoustic black holes, structural dampers, structurally damped structures, and methods, are described.

The term "acoustic black hole" is used to refer to an element, member, or structure, which, in use, exhibits the acoustic black hole effect.

In the description herein, acoustic black holes comprise regions of taper. In the examples shown and described, the taper is a thickness taper. That is, the thickness of the acoustic black hole tapers (i.e., reduces or diminishes in thickness in a direction and along a line toward a point, line or region). However, in contrast to a thickness taper, the taper could also be a "functional taper" or a "functional grading". That is, the tapering could be a tapering function of the acoustic black hole, rather than a tapering thickness. For example, the tapering may be a tapering of material property. The material property may be, for example, density and/or rigidity. This may be achieved by use of additive layer manufacturing (e.g. 3D printing) to form an acoustic black hole having a tapering, graded, or varying, material property.

The term "structural damper" is used to refer to an arrangement, assembly or kit comprising an acoustic black hole and active control components (e.g., comprising a sensor, an actuator, and a controller).

The term "structurally damped structure" is used to refer to a structure, arrangement, assembly or kit comprising an acoustic black hole and a primary structure. The structurally damped structure may also comprise active control components (e.g., comprising a sensor, an actuator, and a controller). That is, the structurally damped structure may comprise a primary structure and a structural damper.

The term "primary structure" is used to refer to a structure that the acoustic black hole or structural damper is arranged to provide structural damping to. The primary structure is a structure that, in use, has a vibration applied to it. The primary structure may be a structure that is vibrated, directly or indirectly, by a source of vibration (e.g., an engine, fluid flow, etc.).

The acoustic black hole may be formed in or on the primary structure. For example, the acoustic black hole may be embedded in the primary structure. Alternatively, or additionally, the acoustic black hole may be coupled to the primary structure. That is, the acoustic black hole may be manufactured separately and coupled, or connected, to the primary structure.

In the embodiments described herein, the acoustic black hole is said to have a first axis and a second axis, and the primary structure is said to have a first axis and a second axis. Throughout, the first axis of the primary structure is parallel to the first axis of the acoustic black hole, and the second axis of the primary structure is parallel to the second axis of the acoustic black hole. The first axis of the primary structure may be the same as the first axis of the acoustic black hole, and the second axis of the primary structure may be the same as the second axis of the acoustic black hole.

In the embodiments described herein, the first axis and second axis are perpendicular. In this way, the acoustic black hole may comprise tapering in directions parallel to, for example, the first axis, and no tapering, or tapering, in the second axis, the first and second axis being perpendicular. This may simplify construction, by avoiding construction or formation of tapering features at relative angles. Nevertheless, in other embodiments, the first axis and second axis need not be perpendicular, which may lead to improvements in structural damping where vibrations emanate from multiple angles relative to the acoustic black hole.

In some embodiments described herein, the acoustic black hole is said to have a first region of taper in a first axis, a second region of taper in a first axis, a first region of taper in a second axis and a second region of taper in a second axis. It will be appreciated that the "first region of taper in a first axis" and the "first region of taper in a second axis" may be distinct regions. That is, said first regions may not be the same first region. Similarly, it will be appreciated that the "second region of taper in a first axis" and the "second region of taper in a second axis" may be distinct regions. That is, said second regions may not be the same second region. It is possible to refer to use alternative ordinal numbers (e.g., third, fourth, etc.) to refer to these regions. For example, the "first region of taper in a second axis" may be referred to as "a third region of taper, the third region of taper being in a second axis", and the "second region of taper in a second axis" may be referred to as "a fourth region of taper, the fourth region of taper being in a second axis".

Applicable to the structurally damped structure embodiments described herein, where the structurally damped structure is said to comprise a primary structure having a "region of curvature" in at least one of the first axis and second axis, the region of curvature may be about the acoustic black hole, surrounding the acoustic black hole and/or in proximity of the acoustic black hole. It will be appreciated that the whole of the primary structure may comprise curvature in at least one of the first axis and second axis. Thus, it is appropriate to refer to the primary structure comprising "at least a region" of curvature.

Referring to Figure 2, a cross sectional view of an acoustic black hole 200 according to a first embodiment is shown. The acoustic black hole 200 comprises a first region of taper 210 in a first tapering direction 212 along a line of maximal tapering 214 of the first region 210. The first tapering direction 212 is parallel to an axis 226 of the acoustic black hole 200. The acoustic black hole 200 comprises a second region of taper 220 in a second tapering direction 222 along a line of maximal tapering 224 of the second region 220. The second tapering direction 222 is different to the first tapering direction 212.

The second tapering direction 222 is opposite to the first tapering direction 212. In this way (and relevant to all embodiments where the tapering directions are opposite), the tapers meet at a point or line. By this construction, the acoustic black hole 200 is adapted to provide damping of vibrations in a plurality of directions through a structure. For example, opposite tapering directions facilitate damping of a wave propagating in a first direction (e.g., the first tapering direction 212) and a wave propagating in a second, opposite, direction (e.g., the second tapering direction 222).

The first tapering direction 212 and second tapering direction 222 are oriented toward one another. That is, the first region of taper 210 and second region of taper 220 taper toward one another. Advantageously (and relevant to all embodiments wherein tapering directions are oriented toward one another), the taper tips may thereby provide mutual support.

The second tapering direction 222 is parallel to the axis 226. That is, both tapering directions 212, 222 are parallel to the same axis 226. Advantageously (and relevant to all embodiments wherein tapering directions are parallel), this simplifies constructions and improves (e.g., maximises) damping of waves in the direction of said axis. The acoustic black hole may thus be used to specifically damp vibrations in a particular axis, by aligning the acoustic black hole with the expected direction of vibrational waves.

Alternatively, in some embodiments, the tapering directions may not be parallel to an axis / the same axis. Instead, the tapering directions may be at an angle to one another. In this way, the acoustic black hole may be configured to damp vibrations which emanate from multiple angularly-displaced directions.

As shown in Figure 2, the axis 226 is a second axis 226. The acoustic black hole 200 further comprises a first axis 216. In the first axis 216, there is no taper. That is, the acoustic black hole 200 does not comprise tapering in the first axis 216, or, in other words, in a direction parallel to the first axis 216. In this way, the acoustic black hole 200 may have relatively higher structural strength in the first axis 216. Construction may also be simplified, whilst nevertheless still being well suited to curved applications.

A damping material 240 is provided on the acoustic black hole 200. The damping material 240 is provided on the surface of the acoustic black hole 200. The damping material is provided on the tapering surface of the acoustic black hole 200. The damping material 240 is provided on the whole of the acoustic black hole.

By this construction, the acoustic black hole 200 can provide damping to vibrations propagating in multiple directions (i.e., in the first tapering direction 212 and the second tapering direction 222). Moreover, a further benefit is that the thin tips, or end points, of the first region 210 and second region 220 provide mutual support, such that the acoustic black hole is strengthened and is more resilient to fatigue. Furthermore, the acoustic black hole 200 is well suited to being provided in a primary structure comprising curvature in an axis.

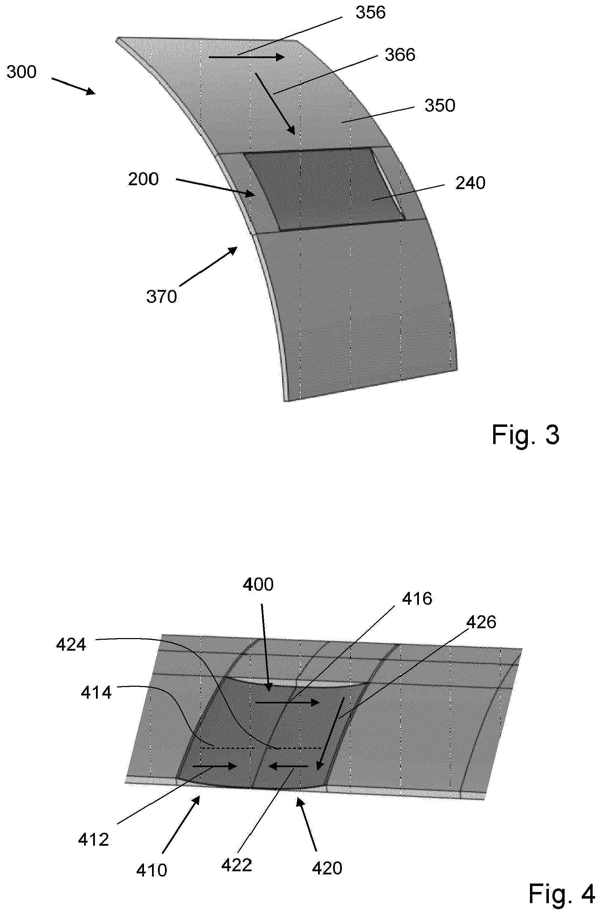

Referring to Figure 3, a structurally damped structure 300 according to a first embodiment is shown. The structurally damped structure 300 comprises an acoustic black hole 200 according to the first embodiment and a primary structure 350. In a first axis 356 of the primary structure 350, the primary structure 350 comprises zero curvature. In a second axis 366 of the primary structure 350, the primary structure 350 comprises a region 370 of concave curvature. That is, in the region 370, the primary structure 350 exhibits concave curvature in the second axis 366. As can be seen from Figure 3, the whole of the primary structure 350 comprises concave curvature in the second axis 366.

By this construction, an advantageous structurally damped structure 300 is provided, which is well adapted to being provided as a surface or curved panel of a body. For example, the structurally damped structure may be used in a vehicle or structure, to provide a housing or panel and also to damp vibrations in the vehicle or structure.

Referring to Figure 4, a cross sectional view of an acoustic black hole 400 according to a second embodiment is shown. The acoustic black hole 400 comprises a first region of taper 410 in a first tapering direction 412 along a line of maximal tapering 414 of the first region 410. The first tapering direction 412 is parallel to an axis 416 of the acoustic black hole 400. The acoustic black hole 400 comprises a second region of taper 420 in a second tapering direction 422 along a line of maximal tapering 424 of the second region 420. The second tapering direction 422 is different to the first tapering direction 412.

The second tapering direction 422 is opposite to the first tapering direction 412.

The first tapering direction 412 and second tapering direction 422 are oriented toward one another. That is, the first region of taper 410 and second region of taper 420 taper toward one another.

The second tapering direction 422 is parallel to the axis 416.

As shown in Figure 4, the axis 416 is a first axis 416. In a second axis 426, there is no taper. That is, the acoustic black hole 400 does not comprise tapering in the second axis 426, or in a direction parallel to the second axis 426. In this way, the acoustic black hole 200 may have relatively higher structural strength in the second axis 426. Construction may also be simplified, whilst nevertheless still being well suited to curved applications.

By this construction, the acoustic black hole 400 can provide damping to vibrations propagating in multiple directions (i.e., in the first tapering direction 412 and the second tapering direction 422). Moreover, a further benefit is that the thin tips, or end points, of the first region 410 and second region 420 provide mutual support, such that the acoustic black hole is strengthened and is more resilient to fatigue. Furthermore, the acoustic black hole 400 is well suited to being provided in a primary structure comprising curvature in an axis.

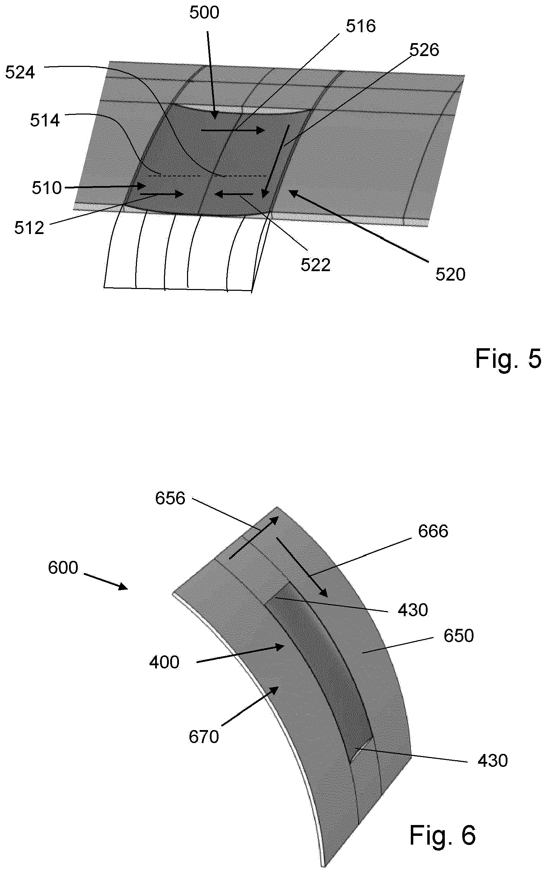

Referring to Figures 5, a cross sectional view of an acoustic black hole 500 according to a third embodiment is shown. The acoustic black hole 500 of the third embodiment comprises all features of the acoustic black hole 400 according to the second embodiment. However, the acoustic black hole 500 comprises tapering in the second axis 526. The acoustic black hole 500 may comprise tapering in the second axis 526 in the direction shown, or may alternatively or additionally be in the opposite direction.

By this construction, the acoustic black hole 500 can provide damping to vibrations propagating in multiple directions (i.e., in the first tapering direction 512 and the second tapering direction 522). Moreover, a further benefit is that the thin tips, or end points, of the first region 510 and second region 520 provide mutual support, such that the acoustic black hole is strengthened and is more resilient to fatigue. Furthermore, the acoustic black hole 500 is well suited to being provided in a primary structure comprising curvature in an axis.

A damping material 440, 540 is provided on the acoustic black hole 400, 500. The damping material 440, 540 is provided on the surface of the acoustic black hole 400, 500. The damping material 440, 540 is provided on the tapering surface of the acoustic black hole 400, 500. The damping material 440, 540 is provided on the whole of the acoustic black hole 400, 500.

Referring back to Figure 4, in the second axis 426, there is a region of concave curvature. In the embodiment shown, in the second axis 426, the acoustic black hole 400 has a concave curvature along its whole length.

Referring to Figure 6, a structurally damped structure 600 according to a second embodiment is shown. The structurally damped structure 600 comprises an acoustic black hole 400 according to the second embodiment (or an acoustic black hole 500 according to the third embodiment) and a primary structure 650.

In a first axis 656 of the primary structure 650, the primary structure 650 comprises zero curvature. In a second axis 666 of the primary structure 650, the primary structure 650 comprises a region 670 of concave curvature. That is, in the region 670, the primary structure exhibits concave curvature in the second axis 666. As can be seen from Figure 6, the whole of the primary structure 650 comprises concave curvature in the second axis 666. The acoustic black hole 400 (or acoustic black hole 500) is provided as only a portion of the primary structure 650 in the second axis 666. The acoustic black hole 400, 500 comprises terminating ends 430, 530. The primary structure 650 may be an annulus, or ring. A plurality of acoustic black holes 400 (or acoustic black holes 500) may be provided about the primary structure 650. The plurality of acoustic black holes 400, 500 may be arranged in a series. The plurality of acoustic black holes 400, 500 may be provided in a discontinuous (i.e., separated from one another) manner along the primary structure 650. That is, the plurality of acoustic black holes 400, 500 may together have a generally annular form, but with separation between adjacent acoustic black holes of the series.

By this construction, an advantageous structurally damped structure 600 is provided, which is well adapted to being provided as a surface or curved panel of a body. For example, the structurally damped structure may be used in a vehicle or structure, to provide a housing or panel and also to damp vibrations in the vehicle or structure.

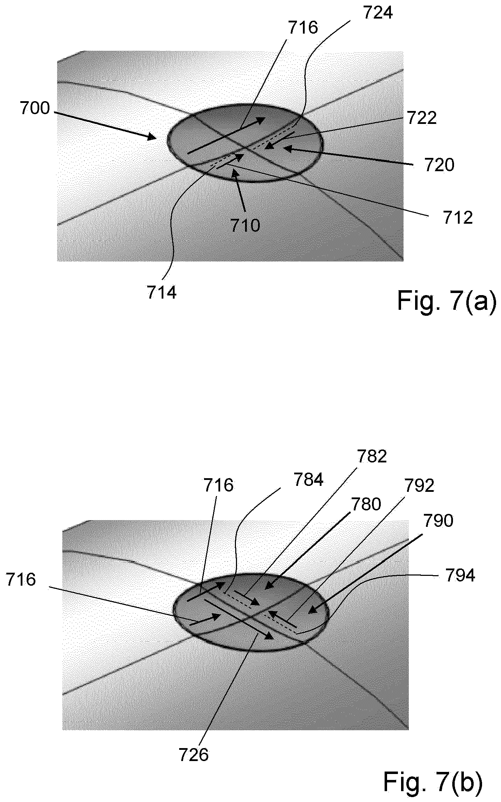

Referring to Figures 7(a) and 7(b), perspective views of an acoustic black hole 700 according to a fourth embodiment are shown. The acoustic black hole 700 has the form of a circle. The acoustic black hole 700 comprises a first region of taper 710 in a first tapering direction 712 along a line of maximal tapering 714 of the first region 710. The first tapering direction 712 is parallel to an axis 716 of the acoustic black hole 700. The acoustic black hole 700 comprises a second region of taper 720 in a second tapering direction 722 along a line of maximal tapering 724 of the second region 720. The second tapering direction 722 is different to the first tapering direction 712.

For the avoidance of doubt, in the description herein, regions of taper may overlap with one another. That is, one region may extend into, and through, another region. Regions need not be distinct from one another.

The second tapering direction 722 is opposite to the first tapering direction 712.

The first tapering direction 712 and second tapering direction 722 are oriented toward one another. That is, the first region of taper 710 and second region of taper 720 taper toward one another.

The second tapering direction 722 is parallel to the axis 716. The axis 716 is a first axis 716.

Referring to Figure 7(b), the acoustic black hole 700 further comprises a first region of taper 780 in a first tapering direction 782. The first tapering direction 782 is along a line of maximal tapering 784 of the first region 780. The first tapering direction 782 is parallel to the second axis 726 of the acoustic black hole 700. The acoustic black hole 700 comprises a second region of taper 790 in a second tapering direction 792. The second tapering direction 792 is along a line of maximal tapering 794 of the second region. The second tapering direction 792 is parallel to the second axis 726 of the acoustic black hole 700.

A damping material 740 is provided on the acoustic black hole 700. The damping material 740 is provided on the surface of the acoustic black hole 700. The damping material 740 is provided on the tapering surface of the acoustic black hole 700. The damping material 740 is provided on the whole of the acoustic black hole 700.

By this construction, the acoustic black hole 700 can provide damping to vibrations propagating in multiple directions (i.e., in the first tapering direction 712, the second tapering direction 722, the first tapering direction 782 (a "third" direction) and the second tapering direction 792 (a "fourth" direction)). Moreover, a further benefit is that the thin tips, or end points, of the regions of tapering provide mutual support, such that the acoustic black hole is strengthened and is more resilient to fatigue. Furthermore, the acoustic black hole 700 is well suited to being provided in a primary structure comprising curvature in an axis.

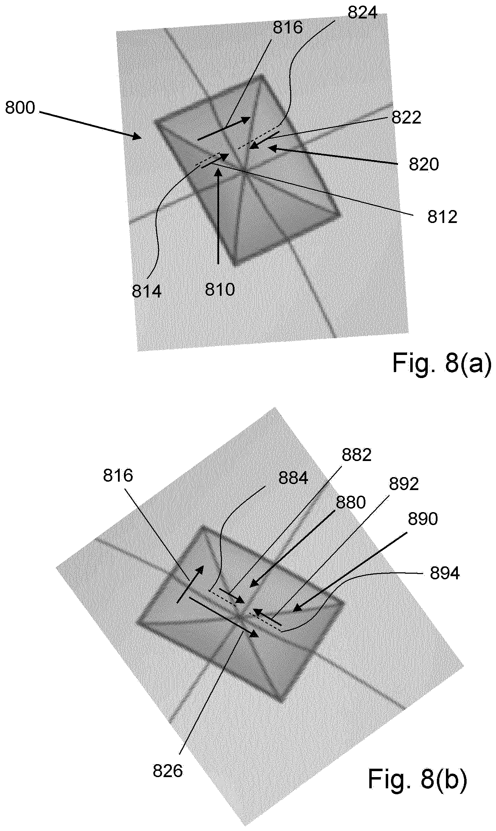

Referring to Figures 8(a) and 8(b), perspective views of an acoustic black hole 800 according to a fifth embodiment are shown. The acoustic black hole 800 has the form of a rectangle. In a specific example, the acoustic black hole 800 has the form of a square. A square acoustic black hole 800 may be simpler to construct than, for example, a circular acoustic black hole. Furthermore, the perpendicular sides of the square acoustic black hole 800 may lead to improved damping, for example leading to improvements in damping of vibrations propagating in different directions.

Referring to Figure 8(a), the acoustic black hole 800 comprises a first region of taper 810 in a first tapering direction 812 along a line of maximal tapering 814 of the first region 810. The first tapering direction 812 is parallel to an axis 816 of the acoustic black hole 800. The acoustic black hole 800 comprises a second region of taper 820 in a second tapering direction 822 along a line of maximal tapering 824 of the second region 820. The second tapering direction 822 is different to the first tapering direction 812.

The second tapering direction 822 is opposite to the first tapering direction 812.

The first tapering direction 812 and second tapering direction 822 are oriented toward one another. That is, the first region of taper 810 and second region of taper 820 taper toward one another.

The second tapering direction 822 is parallel to the axis 816. The axis 816 is a first axis 816.

Referring to Figure 8(b), the acoustic black hole 800 further comprises a first region of taper 880 in a first tapering direction 882. The first tapering direction 882 is along a line of maximal tapering 884 of the first region 880. The first tapering direction 882 is parallel to the second axis 826 of the acoustic black hole 800. The acoustic black hole 800 comprises a second region of taper 890 in a second tapering direction 892. The second tapering direction 892 is along a line of maximal tapering 894 of the second region. The second tapering direction 892 is parallel to the second axis 826 of the acoustic black hole 800.

A damping material 840 is provided on the acoustic black hole 800. The damping material 840 is provided on the surface of the acoustic black hole 800. The damping material 840 is provided on the tapering surface of the acoustic black hole 800. The damping material 840 is provided on the whole of the acoustic black hole 800.

By this construction, the acoustic black hole 800 can provide damping to vibrations propagating in multiple directions (i.e., in the first tapering direction 812, the second tapering direction 822, the first tapering direction 882 (a "third" direction) and the second tapering direction 892 (a "fourth" direction)). Moreover, a further benefit is that the thin tips, or end points, of the regions of tapering provide mutual support, such that the acoustic black hole is strengthened and is more resilient to fatigue. Furthermore, the acoustic black hole 800 is well suited to being provided in a primary structure comprising curvature in an axis.

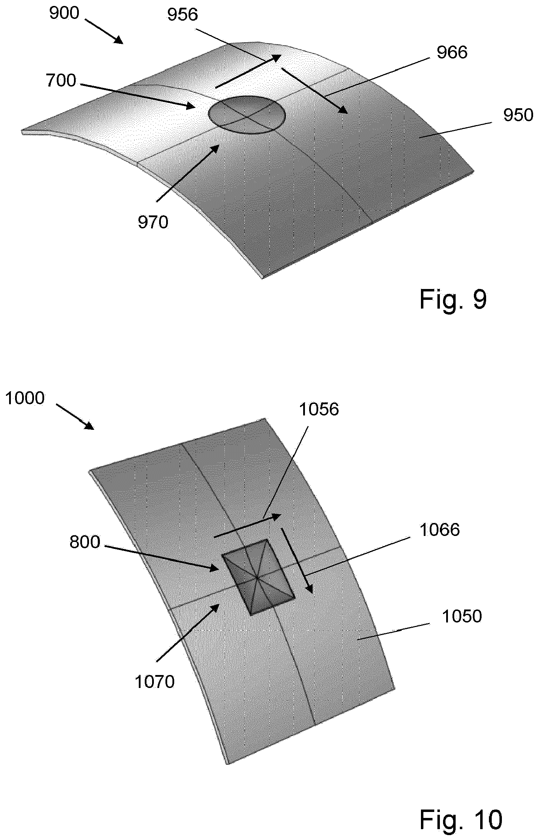

Referring to Figure 9, a structurally damped structure 900 according to a third embodiment is shown. The structurally damped structure 900 comprises the acoustic black hole 700 and a primary structure 950.

In a first axis 956 of the primary structure 950, the primary structure 950 comprises zero curvature. In a second axis 966 of the primary structure 950, the primary structure 950 comprises a region 970 of concave curvature. That is, in the region 970, the primary structure 950 exhibits concave curvature in the second axis 966. As can be seen from Figure 9, the whole of the primary structure 950 comprises concave curvature in the second axis 966.

In another exemplary embodiment, which is not illustrated in the figures, in the second axis 966 of the primary structure 950, the primary structure 950 comprises a region of convex curvature. That is, in said region, the primary structure 950 exhibits convex curvature in the second axis 966.

By this construction, an advantageous structurally damped structure 900 is provided, which is well adapted to being provided as a surface or curved panel of a body. For example, the structurally damped structure may be used in a vehicle or structure, to provide a housing or panel and also to damp vibrations in the vehicle or structure.

Referring to Figure 10, a structurally damped structure 1000 according to a fourth embodiment is shown. The structurally damped structure 1000 comprises the acoustic black hole 800 and a primary structure 1050.

In a first axis 1056 of the primary structure 1050, the primary structure 1050 comprises zero curvature. In a second axis 1066 of the primary structure 1050, the primary structure 1050 comprises a region 1070 of concave curvature. That is, in the region 1070, the primary structure 1050 exhibits concave curvature in the second axis 1066. As can be seen from Figure 10, the whole of the primary structure 1050 comprises concave curvature in the second axis 1066.

In another exemplary embodiment, which is not illustrated in the figures, in the second axis 1066 of the primary structure 1050, the primary structure 1050 comprises a region of convex curvature. That is, in said region, the primary structure 1050 exhibits convex curvature in the second axis 1066.

By this construction, an advantageous structurally damped structure 1000 is provided, which is well adapted to being provided as a surface or curved panel of a body. For example, the structurally damped structure may be used in a vehicle or structure, to provide a housing or panel and also to damp vibrations in the vehicle or structure.

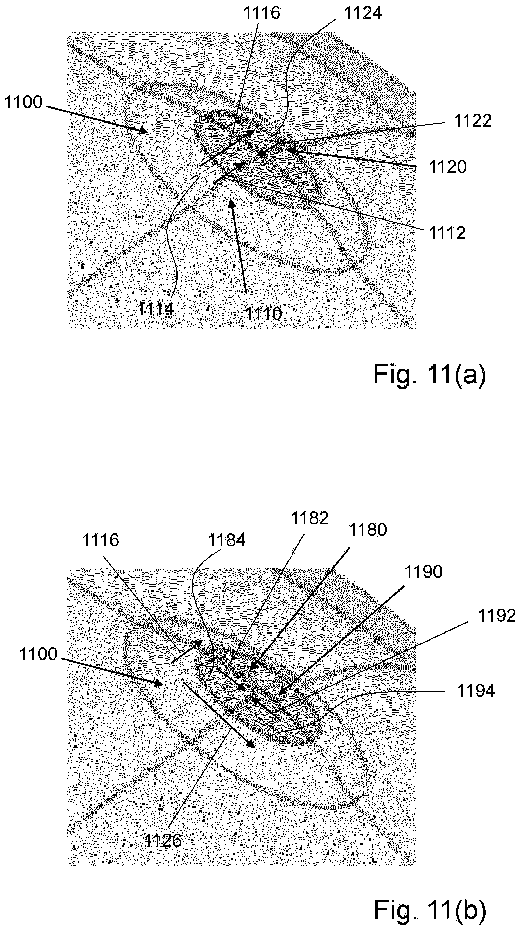

Referring to Figures 11(a) and 11(b), perspective views of an acoustic black hole 1100 according to a sixth embodiment are shown. The acoustic black hole 1100 has the form of a circle.

Referring to Figure 11(a), the acoustic black hole 1100 comprises a first region of taper 1110 in a first tapering direction 1112 along a line of maximal tapering 1114 of the first region 1110. The first tapering direction 1112 is parallel to an axis 1116 of the acoustic black hole 1100. The acoustic black hole 1100 comprises a second region of taper 1120 in a second tapering direction 1122 along a line of maximal tapering 1124 of the second region 1120. The second tapering direction 1122 is different to the first tapering direction 1112.

The second tapering direction 1122 is opposite to the first tapering direction 1112.

The first tapering direction 1112 and second tapering direction 1122 are oriented toward one another. That is, the first region of taper 1110 and second region of taper 1120 taper toward one another.

The second tapering direction 1122 is parallel to the axis 1116. The axis 1116 is a first axis 1116.

Referring to Figure 11(b), the acoustic black hole 1100 further comprises a first region of taper 1180 in a first tapering direction 1182. The first tapering direction 1182 is along a line of maximal tapering 1184 of the first region 1180. The first tapering direction 1182 is parallel to the second axis 1126 of the acoustic black hole 1100. The acoustic black hole 1100 comprises a second region of taper 1190 in a second tapering direction 1192. The second tapering direction 1192 is along a line of maximal tapering 1194 of the second region. The second tapering direction 1192 is parallel to the second axis 1126 of the acoustic black hole 1100.

A damping material 1140 is provided on the acoustic black hole 1100. The damping material 1140 is provided on the surface of the acoustic black hole 1100. The damping material 1140 is provided on the tapering surface of the acoustic black hole 1100. The damping material 1140 is provided on a central region of the acoustic black hole 1100.

By this construction, the acoustic black hole 1100 can provide damping to vibrations propagating in multiple directions (i.e., in the first tapering direction 1112, the second tapering direction 1122, the first tapering direction 1182 (a "third" direction) and the second tapering direction 1192 (a "fourth" direction)). Moreover, a further benefit is that the thin tips, or end points, of the regions of tapering provide mutual support, such that the acoustic black hole is strengthened and is more resilient to fatigue. Furthermore, the acoustic black hole 1100 is well suited to being provided in a primary structure comprising curvature in an axis.

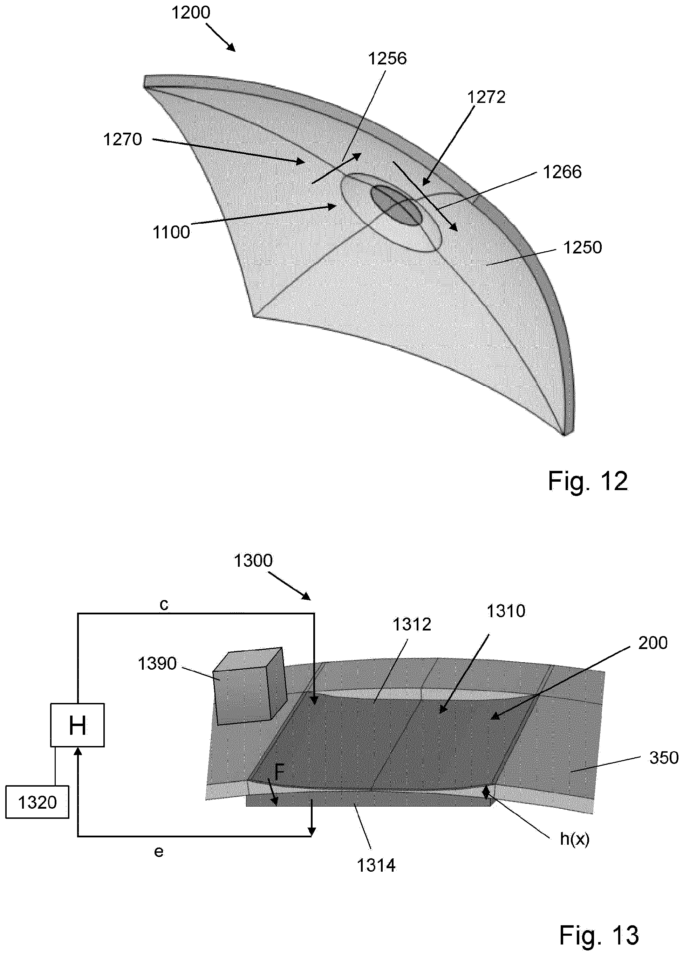

Referring to Figure 12, a structurally damped structure 1200 according to a fifth embodiment is shown. The structurally damped structure 1200 comprises the acoustic black hole 1100 and a primary structure 1250.

In a first axis 1256 of the primary structure 1250, the primary structure 1250 comprises a region 1270 of convex curvature. That is, in the region 1270, the primary structure 1250 exhibits convex curvature in the first axis 1256. As can be seen from Figure 12, the whole of the primary structure 1250 comprises convex curvature in the first axis 1256. In a second axis 1266 of the primary structure 1250, the primary structure 1250 comprises a region 1272 of convex curvature. That is, in the region 1272, the primary structure 1250 exhibits convex curvature in the second axis 1266. As can be seen from Figure 12, the whole of the primary structure 1250 comprises convex curvature in the second axis 1266. The convexity (or degree of convex curvature) of the primary structure 1250 is different to the rate of taper of the acoustic black hole 1100. In this way, the acoustic black hole 1100 appears as an indentation on the surface of the primary structure 1250.

In another exemplary embodiment, which is not illustrated in the figures, in the first axis 1256 of the primary structure 1250, the primary structure 1250 comprises a region of concave curvature, and in the second axis 1266 of the primary structure 1250, the primary structure 1250 comprises a region of concave curvature. In another exemplary embodiment, which is not illustrated in the figures, in the first axis 1256 of the primary structure 1250, the primary structure comprises a region of concave curvature, and in the second axis 1266 of the primary structure 1250, the primary structure 1250 comprises a region of convex curvature. In another exemplary embodiment, which is not illustrated in the figures, in the first axis 1256 of the primary structure 1250, the primary structure comprises a region of convex curvature, and in the second axis 1266 of the primary structure 1250, the primary structure 1250 comprises a region of concave curvature. The concavity (or degree of concave curvature) of the primary structure 1250 is different to the rate of taper of the acoustic black hole 1100. In this way, the acoustic black hole 1100 appears as an indentation on the surface of the primary structure 1250.

By this construction, an advantageous structurally damped structure 1200 is provided, which is well adapted to being provided as a surface or curved panel of a body. For example, the structurally damped structure may be used in a vehicle or structure, to provide a housing or panel and also to damp vibrations in the vehicle or structure.

In the embodiments described below, structural dampers and structurally damped structures are described. Each structurally damped structure comprises a primary structure and structural damper comprising an acoustic black hole.

The structural dampers described below are arrangements, assemblies or kits comprising an acoustic black hole and active control components (e.g., comprising a sensor, an actuator, and a controller). The structural damper may otherwise be referred to as an "active acoustic black hole". A structural damper may be any arrangement described below in absence of the primary structure.

The structurally damped structures described below are structures, arrangements, assemblies, or kits, each comprising a primary structure and a structural damper. The structurally damped structures are configured to provide structural damping of a primary structure.

In the embodiments described below, whilst structurally damped structures are shown and described to comprise an acoustic black hole of the type shown and described in relation to Figure 2, it will be appreciated by the person skilled in the art that any embodiment of an acoustic black hole described herein (for example, of the first to fifth embodiment) can be incorporated in the structurally damped structures.

Similarly, whilst structurally damped structures are shown and described to comprise a primary structure of the type shown and described in relation to Figure 2, it will be appreciated by the person skilled in the art that any primary structure described herein can be incorporated in the structurally damped structures.

The primary structure may be attached or otherwise connected to a vibration source 1390 (shown schematically in Figures 13 to 20 which, in this case, is an engine. The vibration source 1390 produces a vibratory excitation force (V) on the primary structure, which induces vibration and flexural waves in the primary structure. This also causes the primary structure to emit acoustic radiation, i.e., noise.

Each acoustic black hole described herein comprises a tapering thickness (h), whereby the thickness (h) of the acoustic black hole decreases according to the following power law profile:

$$h(x) = h_0 \left( 1 - \frac{x}{x_0} \right)^{\mathrm{n}}$$

$$(2)$$

where the variables in Equation 2 are as defined for Table 1 (and Figure 1).

The change in thickness profile causes the flexural waves to decrease in wave speed along the acoustic black hole, thereby reducing the reflection of the flexural waves from the acoustic black hole and so effectively providing attenuation of the flexural waves.

However, it will be appreciated that any type of acoustic black hole may be used, including those with different tapering profiles to Equation 2 above, provided features of the acoustic black hole are consistent with the description herein.

Referring to Figure 13, a structurally damped structure 1300 according to a sixth embodiment is shown. The structurally damped structure 1300 is configured to provide structural damping of the primary structure 350.

The acoustic black hole 200 (shown in cross section) is provided with an actuator 1310 configured to apply an actuating force to the acoustic black hole 200. In this exemplary embodiment, the acoustic black hole 200 is provided with upper and lower piezo-electric transducer (PZT) patches 1312, 1314 on its upper and lower surfaces 1316, 1318 respectively.

The upper and lower PZT patches 1312, 1314 are each of a material that has an intrinsic level of damping and so provide passive damping at the acoustic black hole 200. In this manner, the upper and lower PZT patches 1312, 1314 may replace the damping material 240.

The lower PZT patch 1314 acts as a sensor that senses the movement of the acoustic black hole 200. In this respect, the movement of the ABH 200 acts to deform the PZT patch 1314, which causes a voltage to be induced across the PZT patch 1314 that is representative of the deformation. The PZT patch 1314 is connected to a controller (H) (shown schematically in Figure 13) such that the voltage induced across the PZT patch 1314 is passed to the controller (H), forming an error signal (e) that is fed back to the controller (H) (i.e. a feedback signal).

The upper PZT patch acts as an actuator 1312 configured to apply an actuating force (F) to the acoustic black hole 200.

The controller (H) is connected to an electrical power supply 1320 (shown schematically in Figure 13) and has an output that is connected to the upper PZT patch 1312.

The controller (H) is configured to produce a control signal (c), in the form of an output voltage, that is applied across the upper PZT patch 1312, in dependence on the error signal (e).

The voltage applied to the upper PZT patch 1312 causes it to deform (i.e. through expansion or contraction) to apply an actuating force (F) to the acoustic black hole 200. In this respect, energy is input from the actuator 1312 into the acoustic black hole 200.

The actuating force (F) is parallel to the plane of the flexural waves that travel along the primary structure 1350 due to excitation by the vibration source 1390.

The controller (H) is configured to control the upper PZT patch 1312 (i.e. the actuator) in dependence on the received error signal (e) so as to provide structural damping of the primary structure 350.

In this respect, the controller (H) controls the actuating force (F) applied by the upper PZT patch 1312, to the acoustic black hole 200, so as to attenuate (in this case minimise), the vibration of the primary structure.

Furthermore, the acoustic black hole 200 acts to control (namely to reduce) the flexural vibrations produced on the primary structure, by the vibration source 1390.

In the currently described embodiment the controller (H) controls the actuating force applied by the actuator 1312, to the acoustic black hole 200, to control vibration of the primary structure using the following direct velocity feedback control:

$$c(n) = -H(z)e(n) \qquad\qquad (3)$$

Where c($\eta$) is the control signal, e($\eta$) is the error signal, $\eta$ is the time index and H(z) is a simple gain.

However, it will be appreciated that any suitable controller may be used in place of H(z), being that either digital or analogue in nature.

It will be appreciated that any suitable type and arrangement of sensors and actuators may be used. In this respect, it will be appreciated that the upper and lower PZT patches could be reversed, i.e. the actuator provided on the lower surface and the sensor provided on the upper surface.

As stated above, the actuator 1312 is configured to apply the actuating force to the acoustic black hole 200. This may advantageously act to control the vibrational energy in the acoustic black hole 200, which may cause the actuator 1312 to have a greater damping effect. Accordingly, this may allow for a reduction in the size (and strength) of the actuator 1312, than would otherwise be required.

Furthermore, the use of the controller (H) and actuator 1312, to provide a controlled actuating force to the acoustic black hole 200 may advantageously improve the low-frequency performance of the acoustic black hole 200, which may allow for the use of structural damping, using an acoustic black hole, in a more effective way and in a wider variety of applications. It may also reduce resonances that would otherwise occur.

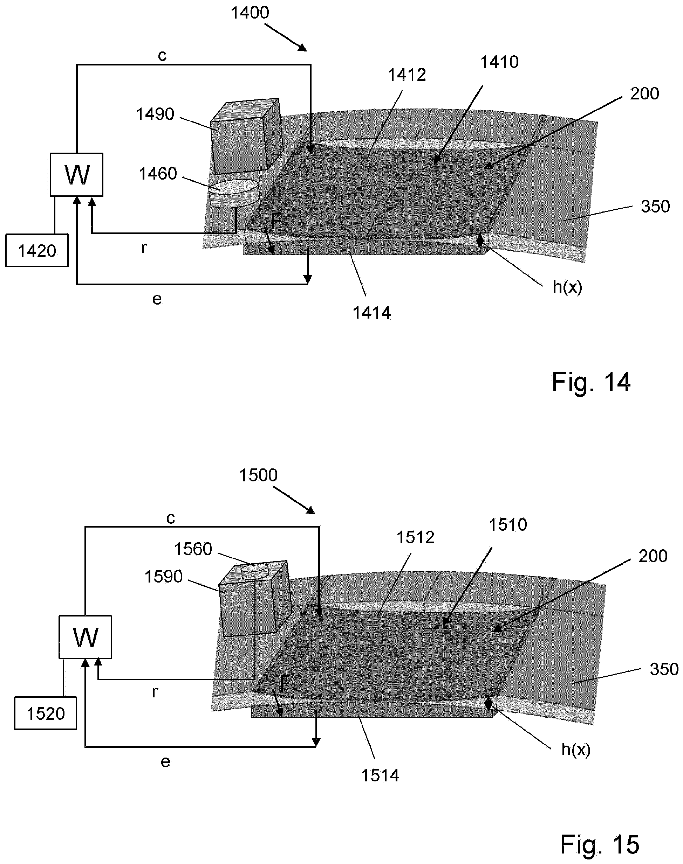

Referring to Figure 14 there is shown a structurally damped structure 1400 according to a seventh embodiment. The structurally damped structure 1400 is the same as the structurally damped structure 1300 of the sixth embodiment, except for the differences described below. Corresponding features are given corresponding reference numerals, but incremented by 100.

The structurally damped structure 1400, of the seventh embodiment, differs from that of the sixth embodiment in that a sensor 1460 is mounted on the primary structure 350, configured to sense the vibration of the primary structure 350. In the currently described embodiment the sensor 1460 is a PZT sensor. However, it will be appreciated that any suitable type of sensor may be used.

The sensor 1460 is located upstream of the upper PZT patch 1412 at the acoustic black hole 200, i.e. upstream of the actuator 1412. The sensor 1460 is connected to the controller (which, in this embodiment, is designated as 'W') so as to provide a feed forward reference signal (r) to the controller (W) that corresponds to the vibrating movement of the primary structure 200 at the location of the sensor 1460.

As with the sixth embodiment, the lower PZT patch 1414 provides a feedback error signal (e) (corresponding to the deflection of the acoustic black hole 200) to the controller (W). However, in this embodiment, the feedback error signal (e) is used to vary the coefficients of the transfer function of the controller (W) such that the controller adapts so as to continue to minimise the vibration . of the primary structure 350. In this respect, the controller (W) is an adaptive controller.

The controller (W) is configured to output a control signal (c), in the form of an output voltage applied across the upper PZT patch 1412 in dependence on the received feedforward reference signal (r) and the feedback error signal (e) so as to control the vibration of the primary structure 350. In this respect, the controller (W) is configured to minimise the vibration of the primary structure 350.

In the currently described embodiment the controller (W) controls the vibration of the primary structure 350 and this controller can be implemented using a Finite Impulse Response ( FIR) filter, where the coefficients can be updated as follows using the well-known filtered-reference least mean squares algorithm:

$$w(n+1) = \gamma w(n) - \alpha r^{\mathrm{T}}(n)e(n) \qquad\qquad (4)$$

where w is the filter coefficient, n is the time index, a is the convergence gain, y is the leakage coefficient, r is the vector of current and past filtered-reference signals and e is the error signal.

However, it will be appreciated that any suitable controller may be used.

Referring to Figure 15 there is shown a structurally damped structure 1500 according to an eighth embodiment. The structurally damped structure 1500 is the same as the structurally damped structure 1400 of the sixth embodiment, except for the differences described below. Corresponding features are given corresponding reference numerals, but incremented by 100.

The structurally damped structure 1500, of the eighth embodiment, differs from that of the seventh embodiment in that the sensor 1560 is mounted on the vibration source 1590 and is configured to sense the vibration of the vibration source 1590 and to provide the sensed vibration as the feed-forward reference signal (r) to the controller (W).

As with the seventh embodiment, the adaptive controller (W) is configured to output a control signal (c), in the form of an output voltage applied across the upper PZT patch 1512 in dependence on the received feedforward reference signal (r) and the feedback error signal (e) so as to control the vibration of the primary structure 350. In this respect, the controller (W) is configured to minimise the vibration of the primary structure 350.

In the currently described embodiment the controller (W) controls the vibration of the primary structure 350 using a corresponding control algorithm to that in the second embodiment.

However, it will be appreciated that any suitable controller may be used.

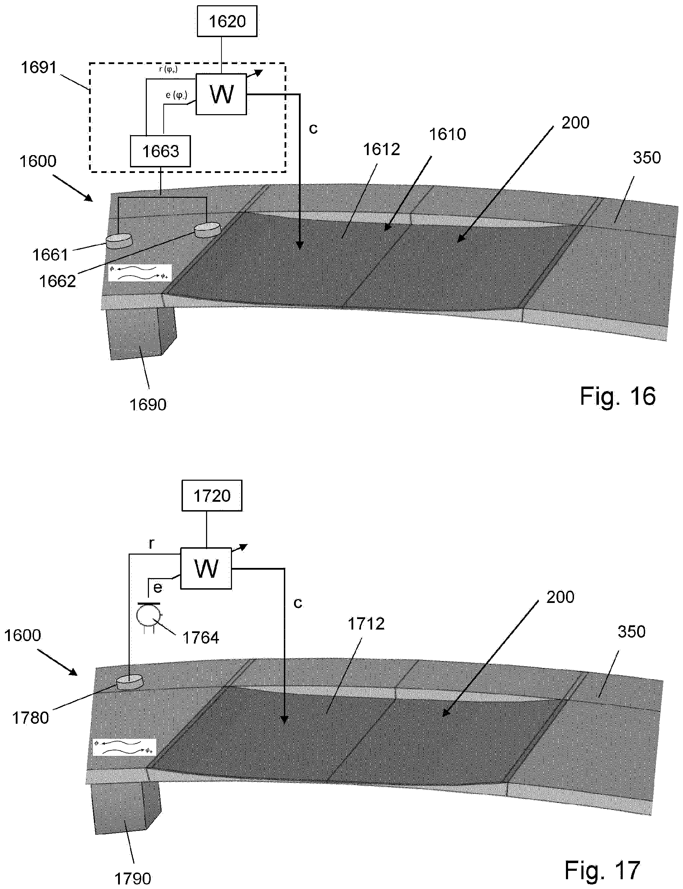

Referring to Figure 16 there is shown a structurally damped structure 1600 according to a ninth embodiment. The structurally damped structure 1600 is the same as the structurally damped structure 1400 of the seventh embodiment, except for the differences described below. Corresponding features are given corresponding reference numerals, but incremented by 200 (relative to those of the seventh embodiment).

The structurally damped structure 1600, of the ninth embodiment, differs from that of the seventh embodiment in that the sensor 1460 is replaced with first and second sensors 1661, 1662 that are mounted on the primary structure 250, with the second sensor 1662 positioned downstream of the first sensor 1661. For the avoidance of doubt, downstream may be defined as downstream relative to a vibration generated by the vibration source, as said vibration propagates from the vibration source to the acoustic black hole.

The first and second sensors 1661, 1662 are PZT sensors that are configured to sense the displacement of the primary structure 350 at their respective locations.

The controller 1691 comprises a control unit (W) and a wave decomposition unit 1663. The sensors 1661, 1662 are connected to the wave decomposition unit 1663 and the wave decomposition unit 1663 is configured to decompose the vibration of the primary structure 350 into the incident and reflected wave components ($\phi$+ and $\phi$-). The incident component is used as the feedforward reference signal (r) and the reflected component is used as the feedback error signal (e).

In the described embodiment the lower PZT patch is not present and there is no feedback signal from a lower PZT patch, as in the preceding embodiments.

The control unit (W) is configured to output a control signal (c), in the form of an output voltage applied across the upper PZT patch 1612 in dependence on the received feedforward reference signal (r) and feedback error signal (e) so as to control the reflected wave from the ABH 200. In this respect, the controller (W) is configured to attenuate the reflected wave from the ABH 200. Accordingly the controller (W) acts to control the flexural wave in the primary structure 350.

In the currently described embodiment the controller (W) controls the reflected wave from the ABH 200 using the following control algorithm:

$$w(n+1) = \gamma w(n) - \alpha \boldsymbol{\phi}_+^{\mathrm{T}}(n)\phi_-(n) \qquad (6)$$

where w is the filter coefficient, n is the time index, a is the convergence gain, y is the leakage coefficient, $\phi$_+is the vector of reference signals provided by the measured incident wave filtered by the plant response and $\phi$_- is the measured reflected wave.

However, it will be appreciated that any suitable control algorithm may be used.

Referring to Figure 17 there is shown a structurally damped structure 1700 according to a tenth embodiment of the invention. The structurally damped structure 1700 is the same as the structurally damped structure 1600 of the ninth embodiment, except for the differences described below. Corresponding features are given corresponding reference numerals, but incremented by 100.

The structurally damped structure 1700, of the tenth embodiment, differs from that of the ninth embodiment in that the first and second sensors 1661, 1662 are replaced by an acoustic sensor, in the form of a microphone 1764, located in the radiated sound field of the primary structure 350. In an alternative embodiment, multiple acoustic sensors may be used at different locations in the radiated sound field.

The microphone 1764 is connected to an input of the controller (W) and passes this sound signal, as an error signal (e), to the controller (W).

A movement sensor 1780 is mounted on the primary structure 350 upstream of the actuator 1712 and provides a feedforward reference signal (r) to the controller (W).

The controller (W) is configured to output a control signal (c), in the form of an output voltage applied across the upper PZT patch 1712 in dependence on the feedforward reference signal (r) and on the error signal (e) so as to control the acoustic radiation from the primary structure 350. In this respect, the controller (W) is configured to minimise the acoustic radiation from the primary structure 350.

In the currently described embodiment the controller (W) controls the acoustic radiation from the primary structure 350 using the same control algorithm as in the seventh embodiment (except that the error signal (e) is provided by the microphone 1764).

However, it will be appreciated that any suitable control algorithm may be used.

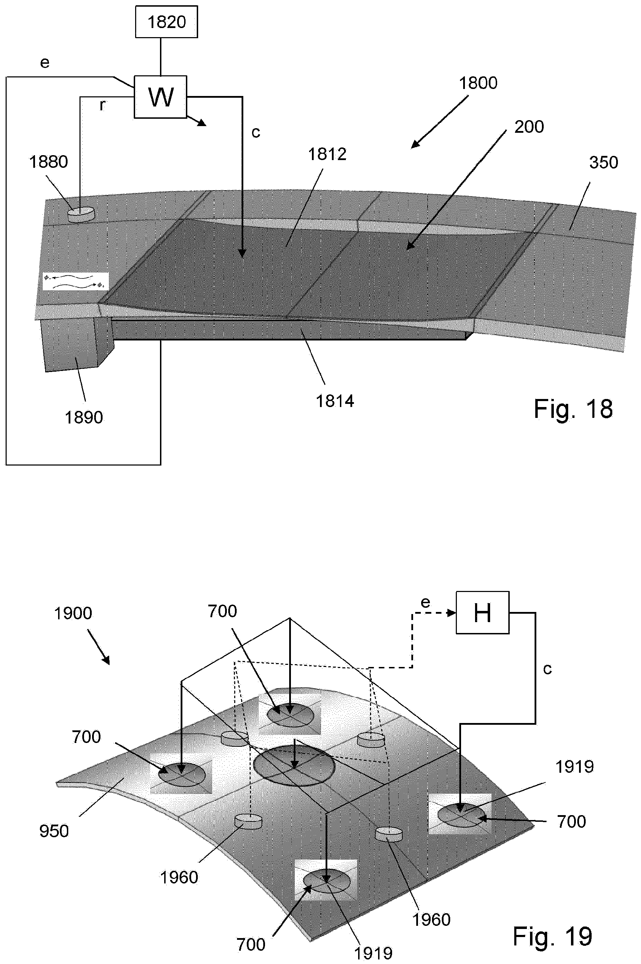

Referring to Figure 18 there is shown a structurally damped structure 1800 according to an eleventh embodiment. The structurally damped structure 1800 is the same as the structurally damped structure 1700 of the tenth embodiment, except for the differences described below. Corresponding features are given corresponding reference numerals, but incremented by 100.

The structurally damped structure 1800, of the eleventh embodiment, differs from that of the tenth embodiment in that the microphone 1764 is replaced with a PZT sensor 1814 mounted on the lower surface of the ABH 200. The PZT sensor 1814 is configured to measure the displacement of the ABH 200 and to provide a feedback error signal (e) to the controller (W).

The controller (W) is configured to output a control signal (c), in the form of an output voltage applied across the upper PZT patch 1812 in dependence on the received feedforward reference signal (r) and feedback error signal (e) so as to control the acoustic radiation from the primary structure 350. In this respect, the controller (W) is configured to minimise the acoustic radiation from the primary structure 350.

In the currently described embodiment the controller (W) controls the acoustic radiation from the primary structure 350 using the following algorithm:

$$w(n+1) = \gamma w(n) - \alpha r^{\mathrm{T}}(n)\mathbf{o}e(n) \tag{7}$$

where w is the filter coefficient, n is the time index, a is the convergence gain, y is the leakage coefficient, r is the vector of current and past filtered-reference signals, e is the error signal and o is an observation filter that estimates the radiated sound field by suitably filtering the structural error sensor 1814.

However, it will be appreciated that any suitable control algorithm may be used.

Referring to Figure 19 there is shown a structurally damped structure 1900 according to a twelfth embodiment. In the twelfth embodiment, the structurally damped structure 1900 comprises a plurality of acoustic black holes 700, each having a circular form, provided in primary structure 950, each acoustic black hole 700 and the primary structure 950 being as described in detail above.

However, it will be appreciated that any type of acoustic black hole may be used.

In the currently described embodiment there are 5 acoustic black holes 700, with an acoustic black hole 700 located in each corner of the upper surface of the primary structure 950 and a further acoustic black hole 700 located in the centre of the upper surface of the primary structure 950.

A plurality of displacement sensors 1960 are mounted on the upper surface of the primary structure 950, generally in the spaces between the acoustic black holes 700. Each sensor 1960 is a PZT sensor configured to detect the displacement of the primary structure 950 at the location of the sensor 1960. Each sensor in turn is connected to a controller (H) so as to provide a feedback error signal that corresponds to the deflection of the primary structure 950 at that location.

An actuator 1919, in the form of a PZT actuator, is provided at the centre of each acoustic black hole 700 (shown schematically by the vertical arrow 1919 at the centre of each acoustic black hole 700). The PZT actuator 700 is of a material that has an intrinsic level of damping and so provides a damping effect at the ABH 700.

The controller (H) is configured to control each actuator 1919 in dependence on the received error signals (e) from the sensors 1960 so as to provide structural damping of the primary structure 950.

In this respect, each ABH 700, coupled with the controller (H) and the actuating force applied by each actuator 1919 acts so as to control the vibration of the primary structure 950. The controller (H) is configured to minimise the vibration of the primary structure 950.

In the currently described embodiment, the controller (H) controls the vibration of the primary structure using the following centralised, fully coupled control law:

$$\mathbf{c}(n) = -\mathbf{H}(z)\mathbf{e}(n) \tag{8}$$

where c(n) is the vector of control signals, H(z) is the transfer function describing the controller and e(n) is the vector of error signals.

However, it will be appreciated that any suitable control law, including centralised and decentralised formulations and digital and analogue implementations, may be used.

Alternatively, or additionally, the controller (H) may be configured to control the absorption of vibration of the primary structure 950 (e.g. by maximising the absorption of the vibration of the primary structure 950).

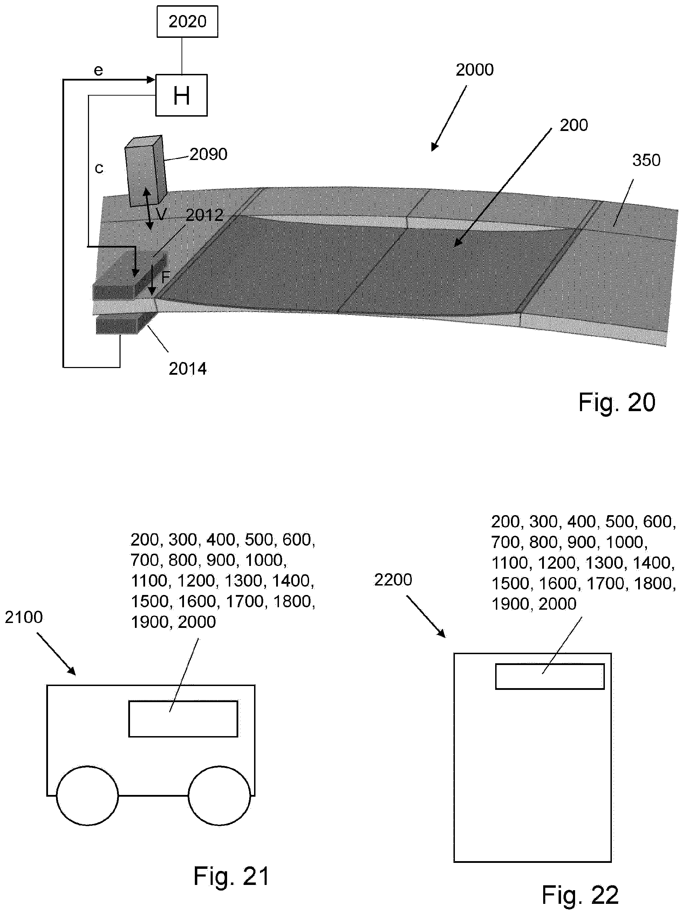

Referring to Figure 20 there is shown a structurally damped structure 2000 according to a thirteenth embodiment of the invention. The structurally damped structure 2000 of the twelfth embodiment is the same as the structurally damped structure 1300 of the sixth embodiment, except for the differences described below. Corresponding features are given corresponding reference numerals, but incremented by 700.

The structurally damped structure 2000 of the thirteenth embodiment is the same as the structurally damped structure 1300 of the sixth embodiment, except in that the upper and lower PZT patches 2012, 2014 are at a different location to the acoustic black hole 200.

In this respect, the upper PZT patch 2012 is configured to apply the actuating force (F) to the structurally damped structure 2000 at a different location to the acoustic black hole 200. This is advantageous in that the actuator does not reduce the acoustic black hole effect by loading the tapered part. It may also allow thinner taper tip heights to be used since the taper does not have to support the mass of the actuator and it allows the passive damping treatment to be optimised without constraints imposed by the collocation of the actuator with the taper.

Similarly, the lower PZT patch 2014 is configured to sense the movement of the primary structure 350 at a different location to the acoustic black hole 200.

In each of the described embodiments of structural dampers and structurally damped structures comprising structural dampers, the use of the controller and actuator(s), to provide a controlled actuating force to the acoustic black hole and/or primary structure may advantageously improve the low-frequency performance of an acoustic black hole, which may allow for the use of structural damping, using an acoustic black hole, in a more effective way and in a wider variety of applications. It may also reduce resonances that would otherwise occur.

Whilst the present invention has been described and illustrated with reference to particular embodiments of structural dampers and structurally damped structures comprising structural dampers, it will be appreciated by those of ordinary skill in the art that the invention lends itself to many different variations not specifically illustrated herein.

For example, in each of the described embodiments of structural dampers and structurally damped structures comprising structural dampers, any suitable corresponding type of sensor or actuator may be used. In this respect, the sensor(s) may be of any suitable type, including displacement sensor, a velocity sensor, a strain sensor, a vibration sensor, an accelerometer, etc. The actuator may be of any suitable type, including a PZT, an electro-magnetic actuator, a pneumatic or hydraulic actuator, etc.

In addition, the location, number and arrangement of the actuators and sensors may be varied and is not limited to that of the described embodiments of structural dampers and structurally damped structures comprising structural dampers.

In certain described embodiments of structural dampers and structurally damped structures comprising structural dampers, the actuator is configured to apply the actuating force to the acoustic black hole. Alternatively, it may be configured to apply the actuating force to a different location on the structurally damped structure, i.e. not at the acoustic black hole.

Any of the control/actuation/sensor arrangements of any of the above described embodiments of structural dampers and structurally damped structures comprising structural dampers may be combined, in any combination, to control one or more of the vibration of the primary structure, a flexural wave in the primary structure and the acoustic radiation from the primary structure.

The structurally damped structure 1800 of the twelfth embodiment may have any of the sensor, actuator and control arrangements of any of the preceding embodiments so as to control the vibration, reflected wave and/or acoustic radiation from the primary structure.

In embodiments where the controller is an adaptive controller, a non-adaptive controller may be used instead (and vice-versa). However, use of an adaptive controller may be advantageous as it may provide improved damping that adapts to changing external conditions.

The primary structure of any of the embodiments described herein may be provided with a plurality of the respective structural dampers of that embodiment, so as to provide structural damping of the primary structure at multiple locations. Furthermore, the primary structure may be provided with a plurality of structural dampers that are a mixture of more than one of the described embodiments.

Referring to Figure 21, a vehicle 2100 is shown. The vehicle 2100 comprises an acoustic black hole, a structural damper, and/or a structurally damped structure, according to any of the embodiments described herein. The vehicle may be a land-based vehicle, watercraft, or aircraft.

Referring to Figure 22, a structure 2200 is shown. The structure comprises an acoustic black hole, a structural damper, and/or a structurally damped structure, according to any of the embodiments described herein. The structure may be a building, infrastructure, construction, or the like.

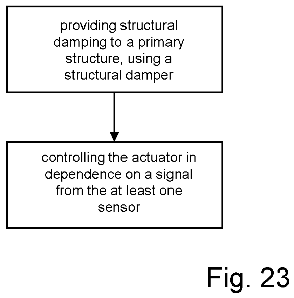

Referring to Figure 23, general methodology principles are shown. Step 2300 comprises providing structural damping to a primary structure, using a structural damper, the structural damper comprising: an acoustic black hole; at least one sensor; and an actuator configured to apply an actuating force to the primary structure and/or acoustic black hole. Step 2302 comprises controlling the actuator in dependence on a signal from the at least one sensor so as to provide structural damping of a primary structure. Optionally, the method comprises controlling the actuator to control at least one of: (a) the vibration of the primary structure; (b) a flexural wave in the primary structure; (c) the acoustic radiation from the primary structure.

**Claims**

1.   An acoustic black hole comprising:

   a first region of taper in a first tapering direction along a line of maximal tapering of the first region, the first tapering direction parallel to an axis of the acoustic black hole; and
   a second region of taper in a second tapering direction along a line of maximal tapering of the second region, the second tapering direction different to the first tapering direction.

2.   The acoustic black hole according to claim 1, wherein the second tapering direction is opposite to the first tapering direction.

3.   The acoustic black hole according to claim 2, wherein the first tapering direction and second tapering direction are oriented toward one another or away from one another.

4.   The acoustic black hole according to any preceding claim, wherein the second tapering direction is parallel to the axis, or is at an angle to the axis.

5.   The acoustic black hole according to any one of claims 1 to 4, wherein the axis is a second axis, the acoustic black hole further comprising a first axis in which there is no taper.

6.   The acoustic black hole according to any one of claims 1 to 4, wherein the axis is a first axis, the acoustic black hole further comprising, in a second axis, no taper.

7.   The acoustic black hole according to any one of claim 1 to 4, wherein the axis is a first axis, the acoustic black hole further comprising, in a second axis, at least one of:

   a first region of taper in a first tapering direction; and
   a second region of taper in a second tapering direction.

8.   The acoustic black hole according to claim 6 or claim 7, wherein in the second axis there is at least a region of concave curvature.

9.   The acoustic black hole according to any one of claims 1 to 4, wherein the axis is a first axis, the acoustic black hole further comprising, in a second axis:

   a first region of taper in a first tapering direction; and
   a second region of taper in a second tapering direction.

10. The acoustic black hole according to claim 9, wherein the acoustic black hole has the form of a circle or square.

11. A structurally damped structure comprising:

   an acoustic black hole according to any one of the preceding claims; and
   a primary structure.

12. The structurally damped structure according to claim 11, wherein:

   when dependent on claim 5, the primary structure comprises:

in the first axis, zero curvature;
in the second axis, at least a region of concave curvature ;

when dependent on any one of claims 6 to 8, the primary structure comprises:

in the first axis, zero curvature;
in the second axis, at least a region of concave or convex curvature,
wherein the ABH is provided as only a portion of the structurally damped structure in the second axis;

when dependent on either of claims 9 or 10, the primary structure comprises:

in the first axis, zero curvature;
in the second axis, at least a region of concave or convex
curvature;

when dependent on either of claims 9 or 10, the primary structure comprises:

in the first axis, at least a region of concave or convex curvature;
in a second axis, at least a region of concave or convex curvature.

13. The acoustic black hole or structurally damped structure according to any one of claims 6 to 12, wherein the second axis is perpendicular to the first axis.

14. The acoustic black hole or structurally damped structure according to any one of the previous claims, further comprising a damping material provided on at least a region of the acoustic black hole.

15. A structural damper for providing structural damping to a primary structure comprising:

an acoustic black hole according to any one of claims 1 to 10;
at least one sensor;
an actuator configured to apply an actuating force to the primary structure and/or to the acoustic black hole; and
a controller configured to control the actuator in dependence on a signal from the at least one sensor so as to provide structural damping of the primary structure.

**Fig. 1**

**Fig. 2**

356

366

300

350

200

240

370

**Fig. 3**

400

416

426

424

414

412

410

422

420

**Fig. 4**

Fig. 5

Fig. 6

Fig. 7(a)

Fig. 7(b)

Fig. 8(a)

Fig. 8(b)

Fig. 9

Fig. 10

Fig. 11(a)

Fig. 11(b)

Fig. 12

Fig. 13

Fig. 14

Fig. 15

Fig. 16

Fig. 17

Fig. 18

Fig. 19

2020

e

H

2090

c

V 2012

F

2014

2000

200

350

**Fig. 20**

2100

200, 300, 400, 500, 600,
700, 800, 900, 1000,
1100, 1200, 1300, 1400,
1500, 1600, 1700, 1800,
1900, 2000

200, 300, 400, 500, 600,
700, 800, 900, 1000,
1100, 1200, 1300, 1400,
1500, 1600, 1700, 1800,
1900, 2000

2200

**Fig. 21**

**Fig. 22**

providing structural damping to a primary structure, using a structural damper

↓

controlling the actuator in dependence on a signal from the at least one sensor

Fig. 23

## EUROPEAN SEARCH REPORT

**Application Number**

EP 22 27 5057

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOOK K ET AL: "Control of vibration in a plate using active acoustic black holes", SMART MATERIALS AND STRUCTURES, IOP PUBLISHING LTD., BRISTOL, GB, vol. 31, no. 3, 15 February 2022 (2022-02-15), XP020415917, ISSN: 0964-1726, DOI: 10.1088/1361-665X/AC51AE [retrieved on 2022-02-15] | 1-15 | INV. G10K11/16 F01D25/04 F02C7/045 F02K1/82 F02K9/97 F42D5/05 F42D5/055 |
| Y | * abstract * * paragraphs [0001] - [0003] * | 15 | ADD. G10K11/178 B64C11/00 B64C23/00 B64C27/00 |
| X | CN 108 133 700 A (UNIV NANJING AERONAUTICS & ASTRONAUTICS) 8 June 2018 (2018-06-08) | 1-14 | |
| Y | * figures 1-6 * * paragraphs [0029] - [0041] * | 15 | |
| X | CN 112 960 040 A (UNIV BEIHANG) 15 June 2021 (2021-06-15) | 1-6,8, 11-14 | |
| Y | * figures 1,2,7,8 * | 15 | |
| A | * paragraphs [0036] - [0048], [0052] - [0063], [0066] - [0070] * | 7,9,10 | |
| X | DENG JIE ET AL: "Reduction of Bloch-Floquet bending waves via annular acoustic black holes in periodically supported cylindrical shell structures", APPLIED ACOUSTICS, ELSEVIER PUBLISHING, GB, vol. 169, 20 June 2020 (2020-06-20), XP086245414, ISSN: 0003-682X, DOI: 10.1016/J.APACOUST.2020.107424 [retrieved on 2020-06-20] | 1-6,8, 11-14 | |
| Y | * abstract * | 15 | |
| A | * figures 1,8,15 * * paragraphs [2.1.1], [04.1], [04.2] * | 7,9,10 | |

-/--

TECHNICAL FIELDS SEARCHED (IPC)

F42D
F02K
F01D
F02C
G10K
F16F
B64C

The present search report has been drawn up for all claims

| Place of search | Date of completion of the search | Examiner |
|---|---|---|
| The Hague | 11 October 2022 | Sartoni, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 22 27 5057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 997 020 A (BUSNEL RENE-GUY ET AL) 14 December 1976 (1976-12-14) | 1-14 | |
| Y | * figures 2-5,7-9 * * column 1, line 47 - column 2, line 65 * * column 3, line 55 - column 4, line 34 * * column 4, line 52 - column 5, line 27 * ----- | 15 | |

TECHNICAL FIELDS
SEARCHED        (IPC)

The present search report has been drawn up for all claims

| Place of search | Date of completion of the search | Examiner |
|---|---|---|
| The Hague | 11 October 2022 | Sartoni, Giovanni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

**EP 22 27 5057**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-10-2022**

| Patent document cited in search report | | Publication date | Patent family member(s) | | Publication date |
|---|---|---|---|---|---|
| CN 108133700 | A | 08-06-2018 | NONE | | |
| CN 112960040 | A | 15-06-2021 | NONE | | |
| US 3997020 | A | 14-12-1976 | FR | 2289993 A1 | 28-05-1976 |
| | | | US | 3997020 A | 14-12-1976 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M.A. MIRONOV.** Propagation of a flexural wave in a plate whose thickness decreases smoothly to zero in a finite interval. *Soviet Physics: Acoustics,* 1988, vol. 34 (3), 318-319

- **ANGELIS KARLOS ; STEPHEN J. ELLIOT ; JORDAN CHEER.** *Journal of Sound and Vibration,* 2019, vol. 449, 368-388